# EUROPEAN PATENT SPECIFICATION

(11) **EP 4 278 941 B1**
(45) Date of publication and mention of the grant of the patent: **01.07.2026**
(21) Application number: 21924127.0
(22) Date of filing: 21.07.2021
(51) Int. Cl.: A47L 11/40, A47L 11/24

(54) **CLEANING METHOD AND DEVICE, AND COMPUTER STORAGE MEDIUM**
REINIGUNGSVERFAHREN UND -VORRICHTUNG SOWIE COMPUTERSPEICHERMEDIUM
PROCÉDÉ ET DISPOSITIF NETTOYAGE, ET SUPPORT D'ENREGISTREMENT INFORMATIQUE

(30) Priority: 07.02.2021 CN 202110169002
(43) Date of publication of application: 22.11.2023
(73) Proprietor: Midea Robozone Technology Co., Ltd., Suzhou, Jiangsu 215131 (CN)
(72) Inventor: HE, Bo, Suzhou, Jiangsu 215131 (CN); FAN, Zexuan, Suzhou, Jiangsu 215131 (CN)
(74) Representative: RGTH
(86) International application number: PCT/CN2021/107591
(87) International publication number: WO 2022/166123

(56) References cited:
- CN-A- 102 053 623
- CN-A- 109 984 684
- CN-A- 109 984 684
- CN-A- 110 464 263
- CN-A- 110 464 263
- CN-A- 110 809 745
- CN-A- 112 971 645
- DE-A1- 102017 109 219
- US-A1- 2020 178 748
- US-A1- 2020 178 748

## Description

### INFIELD

The present invention relates to the field of household appliance control technologies, and more particularly, to a cleaning method and apparatus, and a computer storage medium.

### BACKGROUND

The launch of autonomous cleaning apparatus gives people great convenience in daily life and reduces labor intensity. Such as household cleaning robots are common autonomous cleaning devices, cleaning robots can travel in the household room automatically while inhaling surrounding dust or impurities to complete floor cleaning. With a growing demand for cleaning, cleaning robots with a floor mopping function is increasingly popular among users.

When a cleaning robot cleans a household space, in most control methods the household space is divided into a plurality of cleaning areas of same size, with each cleaning area being in a square or a rectangle, and cleaning operations are performed on the plurality of cleaning areas in turn in the units of the cleaning areas. For each cleaning area, the cleaning robot performs a cleaning operation on the floor by traveling a zigzag-shaped path within the cleaning area. When the cleaning robot is low in power or when the cleaning robot needs to be cleaned, the cleaning robot is charged or cleaned by returning to an area where a base station is located, and then returns to the on-cleaning cleaning area and continues the cleaning operation.

The cleaning robot with base station for self-cleaning needs to frequently return to the base station for cleaning. If the cleaning operation in related art is performed in turn, the cleaning robot will repeat cleaning the area where the base station is located, which is inefficient and easily contaminates the cleaned area, leading to a secondary contamination. CN 109 984 684 A discloses a cleaning control method, a cleaning control device, a cleaning robot and a storage medium, and relates to the technical field of intelligent equipment. According to the cleaning control method, the cleaning robot acquires a map of a space to be cleaned as a first space map, divides the space to be cleaned into at least one cleaning area based on the first space map, setsa cleaning sequence for the cleaning area, and sequentially performs cleaning operation on the cleaning area of the space to be cleaned according to the cleaning sequence by taking the cleaning area as a unit. When the cleaning robot performs the cleaning operation, the cleaning operation is performed on the cleaning area of the space to be cleaned according to the cleaning sequence, so that the cleaning robot can be prevented from polluting the cleaned cleaning area when moving to the area where the base station is located for charging or cleaning a cleaning piece, the cleaning effect is enhanced, and the cleaning efficiency is improved. DE 10 2017 109219 A1 discloses a method for controlling at least one autonomous mobile robot, wherein the at least one robot is designed to navigate in an operational area based on a map of the operational area and to autonomously perform at least one task in the operational area. The method comprises receiving a work order, wherein the work order contains instructions for performing at least one task in the operational area, automatically dividing the work order into at least two subtasks, and automatically defining an order in which the subtasks are processed by the at least one robot, wherein the work order is completely fulfilled once all subtasks have been processed. CN 110 464 263 A discloses a robot cleaning control method and a robot. The robot cleaning control method comprises the steps of determining spatial position relations between areas to be cleaned and an area where a target object is located; determining a cleaning sequence of the areas to be cleaned from far to near according to the spatial position relations between the areas to be cleaned and the area where the target object is located; and controlling the robot to sequentially clean the areas to be cleaned according to the determined cleaning sequence; and controlling the robot to clean the area where the target object is located. According to the method, the robot can be prevented from moving to the cleaned area again, so that the cleaning efficiency of the robot is improved. US 2020/178748 A1 discloses a method, performed by a robot vacuum cleaner, planning a cleaning route including: dividing an indoor space into at least one cleanable region based on an indoor space map generated using at least one sensor included in the robot vacuum cleaner; dividing the at least one cleanable region into a plurality of partial regions based on a cleaning mode of the robot vacuum cleaner; and planning a first cleaning route to control a number of direction changes of the robot vacuum cleaner with respect to each of the plurality of partial regions based on the cleaning mode being a first mode.

### SUMMARY

To solve the existing technical problems, embodiments of the present invention provide a cleaning method and apparatus, and a computer storage medium.

To achieve the above-mentioned objective, the technical solutions of the embodiments of the present invention are realized as follows.

According to the embodiments of the present invention, a cleaning method that for a cleaning device is provided. The method comprises: acquiring a to-be-cleaned area; determining a cleaning section set based on the to-be-cleaned area, the cleaning section set comprising at least one cleaning section and a cleaning order position corresponding to each of the at least one cleaning section, and the cleaning order position of each of the at least one cleaning section being related to a cleaning path of each of the at least one cleaning section; and cleaning each of the at least one cleaning section in turn according to the cleaning order position corresponding to each of the at least one cleaning section.

In some embodiments, the determining the cleaning section set based on the to-be-cleaned area comprises: determining the cleaning section set corresponding to the to-be-cleaned area by querying a predetermined cleaning section table. The predetermined cleaning section table comprises at least one saved cleaning area and a cleaning section set corresponding to each of the at least one saved cleaning area.

In some embodiments, the to-be-cleaned area comprises: a first uncleaned area; and the determining the cleaning section set based on the to-be-cleaned area comprises: dividing the first uncleaned area into a first section and a second section, the first section being an inevitable section for the cleaning device to move to any area from a base station, and the second section being an evitable section for the cleaning device to move to any area from the base station; and determining the cleaning section set comprising the first section and the second section, a cleaning order position of the second section having a higher priority than a cleaning order position of the first section.

In some embodiments, the to-be-cleaned area at least comprises: a first uncleaned area; and the determining the cleaning section set based on the to-be-cleaned area comprises: dividing the first uncleaned area into a third section and a fourth section, the third section being an inevitable section for the cleaning device to move from a base station to a first residual uncleaned area, the fourth section being an evitable section for the cleaning device to move from the base station to the first residual uncleaned area, and the first residual uncleaned area being an area other than the first uncleaned area in the to-be-cleaned area; determining a second uncleaned area adjacent to the first uncleaned area, dividing the second uncleaned area into a fifth section and a sixth section, the fifth section being an inevitable section for the cleaning device to move from the base station to a second residual uncleaned area, the sixth section being an evitable section for the cleaning device to move from the base station to the second residual uncleaned area, and the second residual uncleaned area being an area other than the first uncleaned area and the second uncleaned area in the to-be-cleaned area; determining a third uncleaned area adjacent to the second uncleaned area, and dividing the third uncleaned area into sections until each residual uncleaned area has been divided to obtain respective sections; and determining the cleaning section set based on the third section and the fourth section corresponding to the first uncleaned area, the fifth section and the sixth section corresponding to the second uncleaned area, and the respective sections corresponding to each residual uncleaned area.

In some embodiments, the determining the cleaning section set based on the to-be-cleaned area comprises: acquiring a map of the to-be-cleaned area, the map of the to-be-cleaned area at least comprising a base station; obtaining at least one to-be-cleaned section by dividing the to-be-cleaned area based on the map of the to-be-cleaned area; determining the cleaning path from the base station to each of the at least one to-be-cleaned section; determining an evitable section corresponding to each of the at least one to-be-cleaned section based on the at least one to-be-cleaned section and the cleaning path corresponding to each of the at least one to-be-cleaned section; and obtaining the cleaning section set by sorting a cleaning order position of the at least one to-be-cleaned section based on the evitable section corresponding to each of the at least one to-be-cleaned section.

In some embodiments, the cleaning each of the at least one cleaning section in turn according to the cleaning order position corresponding to each of the at least one cleaning section comprises: recording, during a cleaning process, a current cleaning section as a target cleaning section in response to determining that the cleaning device needs to return to a base station; and returning to the target cleaning section after charging is completed, and continuing to clean according to the cleaning order position.

According to the embodiments of the present invention, a cleaning apparatus for a cleaning device, is provided. The apparatus comprises a first processing module, a second processing module, and a third processing module.

The first processing module is configured to acquire a to-be-cleaned area.

The second processing module is configured to determine a cleaning section set based on the to-be-cleaned area. The cleaning section set comprises at least one cleaning section and a cleaning order position corresponding to each of the at least one cleaning section, and the cleaning order position of each of the at least one cleaning section is related to a cleaning path of each of the at least one cleaning section.

The third processing module is configured to clean each of the at least one cleaning section in turn according to the cleaning order position corresponding to each of the at least one cleaning section.

In some embodiments, the second processing module is configured to determine the cleaning section set corresponding to the to-be-cleaned area by querying a predetermined cleaning section table. The predetermined cleaning section table comprises at least one saved cleaning area and a cleaning section set corresponding to each of the at least one saved cleaning area.

In some embodiments, the to-be-cleaned area comprises a first uncleaned area. The second processing module is configured to: divide the first uncleaned area into a first section and a second section, the first section being an inevitable section for the cleaning device to move to any area from a base station, and the second section being an evitable section for the cleaning device to move to any area from the base station; and determine the cleaning section set comprising the first section and the second section, a cleaning order position of the second section having a higher priority than a cleaning order position of the first section.

In some embodiments, the to-be-cleaned area at least comprises a first uncleaned area. The second processing module is configured to: divide the first uncleaned area into a third section and a fourth section, the third section being an inevitable section for the cleaning device to move from a base station to a first residual uncleaned area, the fourth section being an evitable section for the cleaning device to move from the base station to the first residual uncleaned area, and the first residual uncleaned area being an area other than the first uncleaned area in the to-be-cleaned area; determine a second uncleaned area adjacent to the first uncleaned area, divide the second uncleaned area into a fifth section and a sixth section, the fifth section being an inevitable section for the cleaning device to move from the base station to a second residual uncleaned area, the sixth section being an evitable section for the cleaning device to move from the base station to the second residual uncleaned area, and the second residual uncleaned area being an area other than the first uncleaned area and the second uncleaned area in the to-be-cleaned area; determine a third uncleaned area adjacent to the second uncleaned area, and divide the third uncleaned area into sections until each residual uncleaned area has been divided to obtain respective sections; and determine the cleaning section set based on the third section and the fourth section corresponding to the first uncleaned area, the fifth section and the sixth section corresponding to the second uncleaned area, and respective sections corresponding to each residual uncleaned area.

In some embodiments, the second processing module is configured to: acquire a map of the to-be-cleaned area, the map of the to-be-cleaned area at least comprising a base station; obtain at least one to-be-cleaned section by dividing the to-be-cleaned area based on the map of the to-be-cleaned area; determine the cleaning path from the base station to each of the at least one to-be-cleaned section; determine an evitable section corresponding to each of the at least one to-be-cleaned section based on the at least one to-be-cleaned section and the cleaning path corresponding to each of the at least one to-be-cleaned section; and obtain the cleaning section set by sorting a cleaning order position of the at least one to-be-cleaned section based on the evitable section corresponding to each of the at least one to-be-cleaned section.

In some embodiments, the third processing module is configured to record, during a cleaning process, a current cleaning section as a target cleaning section in response to determining that the cleaning device needs to return to a base station, and after charging is completed, return to the target cleaning section and continue to clean according to the cleaning order position.

According to the embodiments of the present invention, a cleaning apparatus is further provided. The apparatus comprises a processor and a memory storing a computer program that is executable on the processor. The processor is configured to, when executing the computer program, implement the steps of any one of the cleaning methods.

According to the embodiments of the present invention, a computer readable storage medium is further provided. The computer readable storage medium has computer instructions stored thereon. The computer instructions, when executed by a processor, implement the steps of any one of the cleaning methods.

The embodiments of the present invention provide the cleaning method and apparatus, and the computer storage medium. The method comprises: acquiring the to-be-cleaned area; determining the cleaning section set based on the to-be-cleaned area, the cleaning section set comprising at least one cleaning section and the cleaning order position corresponding to each of the at least one cleaning section, and the cleaning order position of each of the at least one cleaning section being related to the cleaning path of each of the at least one cleaning section; and cleaning each of the at least one cleaning section in turn according to the cleaning order position corresponding to each of the at least one cleaning section. By using technical solutions of the embodiments of the present invention, each of the at least one cleaning section is cleaned in turn according to the cleaning order position, avoiding repeated cleaning, and preventing secondary contamination caused by passing through the cleaned section again.

### BRIEF DESCRIPTION OF THE DRAWINGS

FIG. 1 is a flowchart illustrating a cleaning method according to an embodiment of the present invention.
FIG 2 (a), FIG 2 (b), and FIG 2 (c) are schematic diagrams of a kind of area division according to an embodiment of the present invention.
FIG. 3 (a), FIG. 3 (b), and FIG. 3 (c) are schematic diagrams of another kind of area division according to an embodiment of the present invention.
FIG. 4 is a flowchart illustrating another cleaning method according to an embodiment of the present invention.
FIG. 5 is a schematic diagram illustrating a division method of a to-be-cleaned area according to an embodiment of the present invention.
FIG. 6 is a schematic diagram illustrating another division method of a to-be-cleaned area according to an embodiment of the present invention.
FIG. 7 is a schematic diagram illustrating a structure of a cleaning apparatus according to an embodiment of the present invention.
FIG. 8 is a schematic diagram illustrating a structure of another cleaning apparatus according to an embodiment of the present invention.

### detailed DESCRIPTION of the embodiments

In order to enable those skilled in the art to better understand the solutions of the embodiments of the present invention, technical solutions of the embodiments of the present invention will be clearly described below with accompanying drawings of the embodiments of the present invention. Obviously, the embodiments as described below are merely some embodiments of the present invention, rather than all of the embodiments.

Terms such as "first", "second", and "third", in the embodiments in the description, the claims, and the accompanying drawings of the present invention, are used to distinguish similar objects, rather than describe a particular order or sequence. In addition, terms "comprise", "have", and any variations thereof are intended to cover non-exclusive inclusions, e.g., inclusion of a series of steps or units. The method, system, product, or device is not necessarily limited to those clearly listed steps or units, but may comprise other steps or units that are not clearly listed or are inherent to the process, method, product, or device.

In various embodiments of the present invention, a to-be-cleaned area is acquired. A cleaning section set is determined based on the to-be-cleaned area. The cleaning section set comprises at least one cleaning section and a cleaning order position corresponding to each of the at least one cleaning section, and the cleaning order position of each of the at least one cleaning section is related to a cleaning path of each of the at least one cleaning section. Each of the at least one cleaning section is cleaned in turn according to the cleaning order position corresponding to each of the at least one cleaning section.

The present disclosure is described in further detail below with reference to the accompanying drawings and specific embodiments.

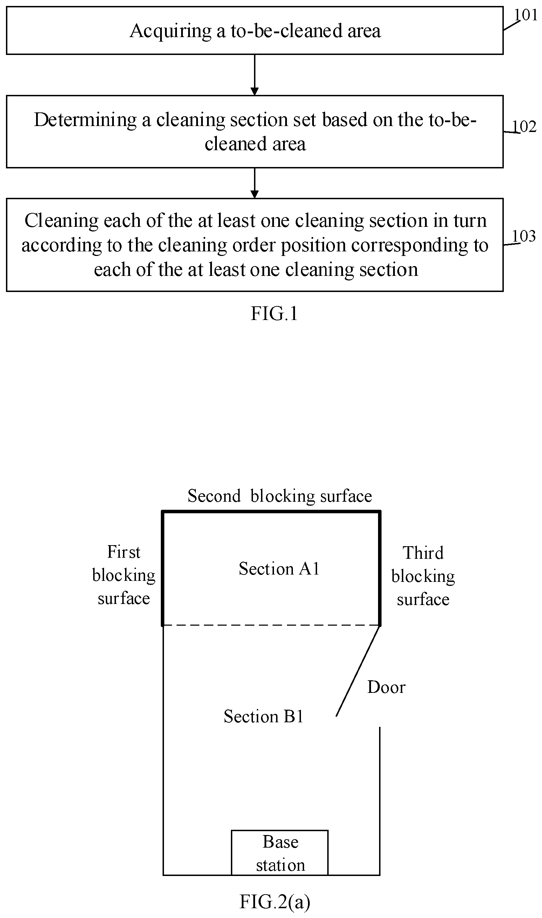

FIG. 1 is a flowchart illustrating a cleaning method according to an embodiment of the present invention. As illustrated in FIG. 1, the method comprises operations at blocks.

At block 101, the to-be-cleaned area is acquired.

At block 102, the cleaning section set is determined based on the to-be-cleaned area. The cleaning section set comprises at least one cleaning section and the cleaning order position corresponding to each of the at least one cleaning section, and the cleaning order position of each of the at least one cleaning section is related to a cleaning path of each of the at least one cleaning section.

At block 103, each of the at least one cleaning section is cleaned in turn according to the cleaning order position corresponding to each of the at least one cleaning section.

In some embodiments, the cleaning section set comprises at least one cleaning section and the cleaning order position corresponding to each of the at least one cleaning section.

In a further embodiment, the cleaning section set comprises at least one cleaning section, e.g., comprising: section 1, section 2, section 3 ...... section N.

Each cleaning section has a different cleaning order position, e.g., section 1 corresponds to cleaning order position 1, section 2 corresponds to cleaning order position 2, and section 3 corresponds to cleaning order position 3...... section N corresponds to cleaning order position N.

Correspondingly, the cleaning each of the at least one cleaning section in turn according to the cleaning order position corresponding to each of the at least one cleaning section comprises: cleaning section 1, section 2 and section 3 ...... section N in turn based on an order of cleaning order position 1, cleaning order position 2 ...... cleaning order position N.

During a cleaning process, if a cleaning device returns to a base station for being charged or other operations halfway during the process, a last cleaning section (or position) is recorded, and after charging is completed, the cleaning device returns to the recorded last cleaning section or a section corresponding to a next order position of the order position corresponding to the last cleaning section for cleaning.

For example, the cleaning device cleans section 2, determines that the cleaning device needs to return to the base station, and records the last cleaning section (or position), i.e., section 2.

After charging is completed, the cleaning device returns to the recorded last cleaning section, i.e., section 2. Or, the cleaning device directly cleans a cleaning section, i.e., section 3, corresponding to a next order position of the order position corresponding to section 2 (accordingly, the cleaning device by default will return to the base station only when it has completed a cleaning of a current section).

A position of the base station is a position for charging the cleaning device, and the base station may be a charge base for the cleaning device.

The cleaning order position of each of the at least one cleaning section is related to the cleaning path of each of the at least one cleaning section. The cleaning path refers to a path that the cleaning device travels from the base station to the corresponding cleaning section.

That is, the cleaning order position of the cleaning section is related to the path that the cleaning device travels from the base station to the corresponding cleaning section.

A cleaning section with the highest cleaning order position will not be passed by the cleaning device to travel to other cleaning sections.

In some embodiments, the cleaning each of the at least one cleaning section in turn according to the cleaning order position corresponding to each of the at least one cleaning section comprises: recording, during a cleaning process, a current cleaning section as a target cleaning section in response to determining that the cleaning device needs to return to a base station; and returning to the target cleaning section after charging is completed and continuing to clean according to the cleaning order position.

When the cleaning device is set to estimate whether a cleaning operation for the current cleaning section can be completed based on a power level, it is considered that the cleaning device returns to the base station after the cleaning device will definitely complete the current cleaning section. In such a case, after charging is completed, the cleaning device returns to a cleaning section in a next cleaning order position of the cleaning order position corresponding to the target cleaning section and continues to clean according to the cleaning order position.

In some embodiments, the determining the cleaning section set based on the to-be-cleaned area comprises: determining the cleaning section set corresponding to the to-be-cleaned area by querying a predetermined cleaning section table. The predetermined cleaning section table comprises at least one saved cleaning area and a cleaning section set corresponding to each of the at least one saved cleaning area.

The method may be applied to the cleaning device, e.g., a cleaning robot, an intelligent floor cleaner, a floor cleaner, or the like.

The cleaning device, after determining the cleaning section set of the cleaning area, may save the cleaning section set of the corresponding cleaning area, and read the saved cleaning section set of the cleaning area (i.e., the saved cleaning area) when needing to acquire the cleaning section set.

The cleaning section set of the saved cleaning area may be saved in the cleaning device or in a server.

For example, the cleaning device may communicate with the server. As a first embodiment, the server is connected to at least one cleaning device. The cleaning device may receive the cleaning section set corresponding to the cleaning area transmitted by the server, and perform the cleaning operation based on the cleaning section set of the cleaning area transmitted by the server. The cleaning device may further transmit the cleaning section set of a cleaning area determined by itself to the server for saving.

As a second embodiment, the server may be connected to at least one terminal (the terminal may be a mobile phone, a tablet computer, a personal computer, a laptop computer, or other terminal device, which can access a network). The terminal may be connected to the cleaning device. The terminal may receive the cleaning section set of the cleaning area transmitted by the server and transmit the cleaning section set of the cleaning area to the cleaning device. The cleaning device may perform the cleaning operation based on the cleaning section set of the cleaning area transmitted by the server. The cleaning device may further transmit the cleaning section set of the cleaning area determined by itself to the terminal, and the terminal transmits the cleaning section set of the corresponding cleaning area to the server.

As a third embodiment, the server may be connected to at least one terminal and at least one cleaning device. Each terminal may further be connected to the cleaning device. Both the terminal and the cleaning device may receive the cleaning section set of the cleaning area transmitted by the server and the terminal may transmit the cleaning section set of the cleaning area to the cleaning device. The cleaning device may perform the corresponding cleaning operation based on the cleaning section set of the cleaning area transmitted by the server or the terminal. The cleaning device may further transmit the cleaning section set of the cleaning area determined by itself to the terminal, and the terminal transmits the cleaning section set of the corresponding cleaning area to the server. Or, the cleaning device may directly transmit the cleaning section set of the cleaning area determined by itself to the server.

In the embodiment of the present invention, the cleaning device, the terminal, and the cleaning area each have a unique device identifier. When the cleaning device is connected to the server or the terminal, the terminal or the server may record a corresponding connection relationship based on the device identifier of the cleaning device. When the terminal is connected to the server, the server may record a corresponding connection relationship based on the device identifier of the terminal and/or the device identifier of the cleaning device corresponding to the terminal.

Herein, the cleaning device has a shooting module, such as a camera. The camera may be a single camera or double cameras. The single camera or the double cameras are configured to shoot video data to obtain an environment of the to-be-cleaned area, so that the cleaning section set is determined during operation.

For example, the to-be-cleaned area may be marked with room names, such as master bedroom, secondary bedroom, room one, room two, etc. Each room corresponds to a different cleaning section set.

In practice, if the cleaning device is used for the first time or does not have a save function, it may be necessary to determine the cleaning section while operating. Some of the to-be-cleaned areas are relatively simple, such as only a relatively simple area. It is only necessary to divide the area, and cleaning may be started at the furthest position away from the base station in turn. Some of the to-be-cleaned areas are more complex and need to be divided several times.

In some embodiments, the to-be-cleaned area comprises a first uncleaned area.

The determining the cleaning section set based on the to-be-cleaned area comprises: dividing the first uncleaned area into a first section and a second section; and determining the cleaning section set comprising the first section and the second section. A cleaning order position of the second section has a higher priority than a cleaning order position of the first section. The first section is an inevitable section for the cleaning device to move to any area from a base station, and the second section is an evitable section for the cleaning device to move to any area from the base station.

A division of the to-be-cleaned area can be realized based on a position of the base station and a position of a blocking object. The blocking object can be an object occupying a large area of floor such as a wall, a cabinet, a bed, and the like.

In practice, a square area can be divided based on a first blocking surface, a second blocking surface, and a third blocking surface (the blocking surface is a surface of the above mentioned blocking object). For example, in a scene illustrated in FIG. 2(a), the to-be-cleaned area can be divided into two sections and a cleaning order position of section A1 has a higher priority than a cleaning order position of section B1.

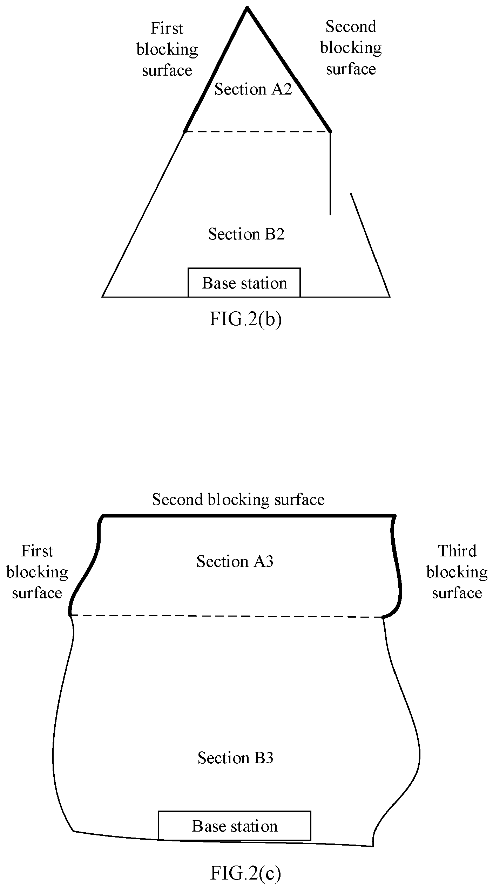

A triangular area can be divided based on a first blocking surface and a second blocking surface. For example, in a scene illustrated in FIG. 2(b), the to-be-cleaned area can be divided into two sections and a cleaning order position of section A2 has a higher priority than a cleaning order position of section B2.

An irregular area can be divided based on a certain area size (which can be predetermined or can be random, but is at least greater than a certain threshold to avoid excessive computation caused by multiple times of divisions). For example, in a scene illustrated in FIG. 2(c), the to-be-cleaned area can be divided into at least two sections and a cleaning order position of section A3 has a higher priority than a cleaning order position of section B3.

For the divided sections, a further division can be made. A further division for a cleaning section that is closer to the base station (having a relatively low cleaning order position) may be generally performed.

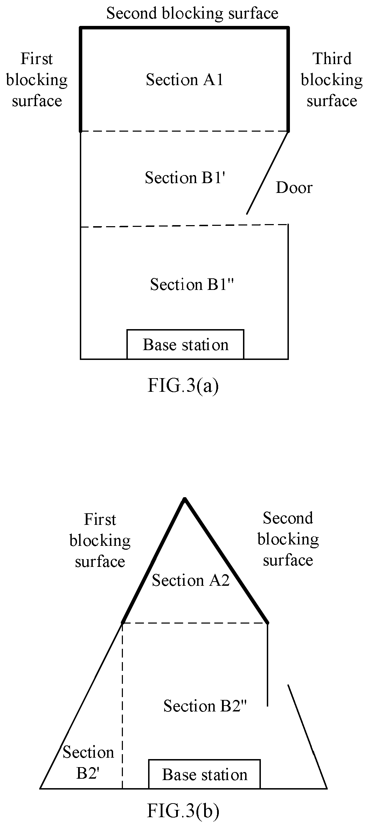

For example, for the scene illustrated in FIG. 2(a), the divided section (denoted as section A1) is used as the blocking object, and another section is further divided (i.e., section B1 is divided) based on three blocking surfaces. The other section can be divided into two sections, i.e., section B1' and section B1" as illustrated in FIG. 3(a). The cleaning order position of section B1" has a higher priority than the cleaning order position of section B1".

For the scene illustrated in FIG. 2(b), the divided section (denoted as section A2) is used as the blocking object, and another section is further divided (i.e., section B2 is divided) based on the blocking surfaces. The other section can be divided into two sections, i.e., section B2' and section B2" as illustrated in FIG. 3(b). The cleaning order position of section B2" has a higher priority than the cleaning order position of section B2".

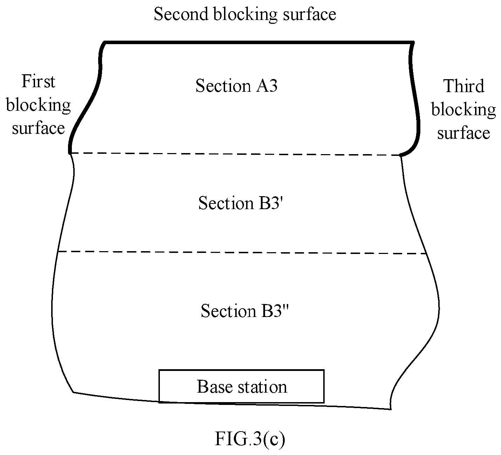

For the scene illustrated in FIG. 2(c), the divided section (denoted as section A3) is used as the blocking object, and another section is further divided (i.e., section B3 is divided) based on the blocking surfaces. The other section can be divided into two sections, i.e., section B3' and section B3" as illustrated in FIG. 3(c). The cleaning order position of section B3" has a higher priority than the cleaning order position of section B3".

In some embodiments, the to-be-cleaned area at least comprises: a first uncleaned area.

The determining the cleaning section set based on the to-be-cleaned area comprises: dividing the first uncleaned area into a third section and a fourth section; determining a second uncleaned area adjacent to the first uncleaned area, and dividing the second uncleaned area into a fifth section and a sixth section; determining a third uncleaned area adjacent to the second uncleaned area, and dividing the third uncleaned area into sections until each residual uncleaned area has been divided to obtain respective sections; and determining the cleaning section set based on the third section and the fourth section corresponding to the first uncleaned area, the fifth section and the sixth section corresponding to the second uncleaned area, and the respective sections corresponding to each residual uncleaned area. The third section is an inevitable section for the cleaning device to move from a base station to a first residual uncleaned area, and the fourth section is an evitable section for the cleaning device to move from the base station to the first residual uncleaned area. The first residual uncleaned area is an area other than the first uncleaned area in the to-be-cleaned area. The fifth section is an inevitable section for the cleaning device to move from the base station to a second residual uncleaned area, and the sixth section is an evitable section for the cleaning device to move from the base station to the second residual uncleaned area. The second residual uncleaned area is an area other than the first uncleaned area and the second uncleaned area in the to-be-cleaned area.

The to-be-cleaned area at least comprises the first uncleaned area, and may further comprise the second uncleaned area, the third uncleaned area, and the residual uncleaned area. The above corresponding uncleaned areas are divided in turn with above steps.

The evitable section is an area that the cleaning device will not pass through when returning to the base station.

The inevitable section is an area that the cleaning device will pass through when returning to the base station.

The inevitable section has a common unblocked boundary with a next uncleaned section.

In the above method, cleaning and division of an area may be performed at the same time. For the evitable section, cleaning may be performed first, and then the section is used as the blocking boundary and will not be re-entered.

For example, the first uncleaned area is divided into the third section and the fourth section. The fourth section is an evitable section for the cleaning device to move from the base station to the first residual uncleaned area. The cleaning order position of the fourth section is the first and the cleaning order position of the third section may be the last.

The second uncleaned area adjacent to the first uncleaned area is divided into the fifth section and the sixth section. The sixth section is the evitable section for the cleaning device to move from the base station to the second residual uncleaned area. The cleaning order position of the sixth section is the second, and the cleaning order position of the fifth section may be the second-to-last.

The third uncleaned area adjacent to the second uncleaned area is divided based on the above-described division of the second uncleaned area and the cleaning order position is determined. By analogy, the to-be-cleaned area is divided and cleaning is completed according to the cleaning order position.

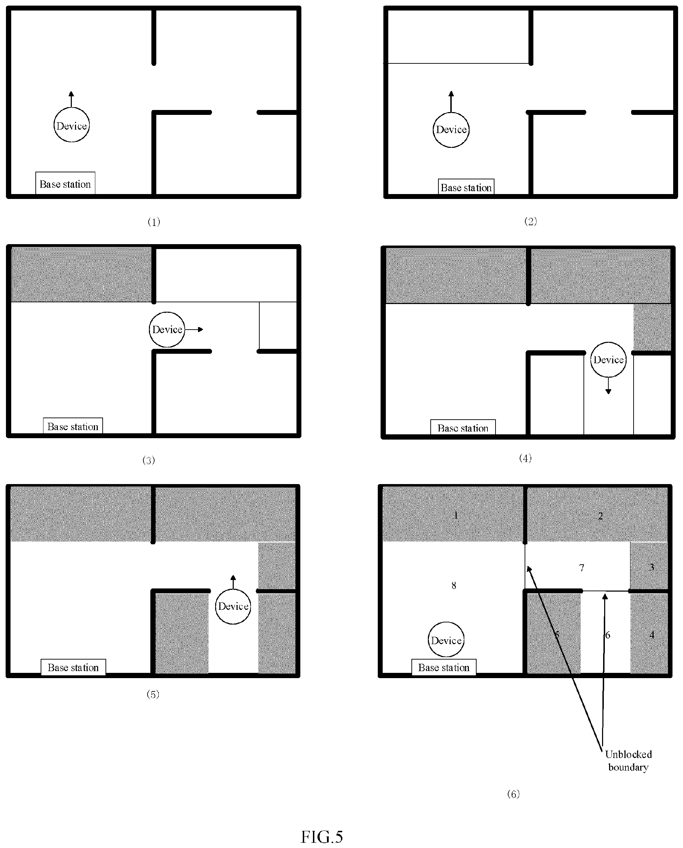

With reference to FIG. 5, FIG. 5 is a schematic diagram illustrating a division method of a to-be-cleaned area according to an embodiment of the present invention. As illustrated in FIG. 5, section 1, section 2......section 8 are obtained by dividing the to-be-cleaned area in turn. The machine in the diagram is the cleaning device, such as the cleaning robot.

In practice, the cleaning device may pre-acquire a map of the to-be-cleaned area, and obtain the cleaning section set by dividing the to-be-cleaned area based on the map of the to-be-cleaned area.

Based on this, in some embodiments, the cleaning each of the at least one cleaning section in turn according to the cleaning order position corresponding to each of the at least one cleaning section comprises: acquiring a map of the to-be-cleaned area, the map of the to-be-cleaned area at least comprising a base station; obtaining at least one to-be-cleaned section by dividing the to-be-cleaned area based on the map of the to-be-cleaned area; determining the cleaning path from the base station to each of the at least one to-be-cleaned section; determining an evitable section corresponding to each of the at least one to-be-cleaned section based on the at least one to-be-cleaned section and the cleaning path corresponding to each of the at least one to-be-cleaned section; and sorting a cleaning order position of the at least one to-be-cleaned section based on the evitable section corresponding to each of the at least one to-be-cleaned section to obtain the cleaning section set.

An acquisition method may be obtained by drawing subsequent to travelling once in a corresponding area in advance. Alternatively, the cleaning device may be connected to a terminal owned by a user, and the user draws the map of the to-be-cleaned area through the terminal, and sends the map of the to-be-cleaned area to the cleaning device.

For example, four sections are obtained based on the blocking surface division, which are denoted as section 1, section 2, section 3, and section 4, respectively.

The cleaning device reaches section 1 from the base station by passing through section 2, section 3, and section 4.

The cleaning device reaches section 2 from the base station by passing through section 3 and section 4.

The cleaning device reaches section 3 from the base station by passing through section 4.

In this way, a cleaning order position of section 1 can be determined to have a higher priority than the cleaning order positions of section 2, section 3, and section 4. The cleaning order position of section 2 has a higher priority than the cleaning order positions of section 3 and section 4. The cleaning order position of section 3 has a higher priority than the cleaning order position of section 4.

Further, the determined cleaning section set comprises section 1, section 2, section 3, and section 4, and the cleaning order position is from top to down as follows: section 1, section 2, section 3, and section 4.

The cleaning device may have a processing module, a camera, a positioning module, and the like, and is configured to perform the steps described above. For example, the camera is configured to acquire environmental information, and the processing module is configured to divide into the sections and perform the cleaning operation. The positioning module is configured to determine the position where the cleaning device is located. Above functional division of the processing module, the camera, and the positioning module is only an example, and is not a limitation to a division of specific functional modules. Different modules can be configured based on needs to realize a method as described above in practice.

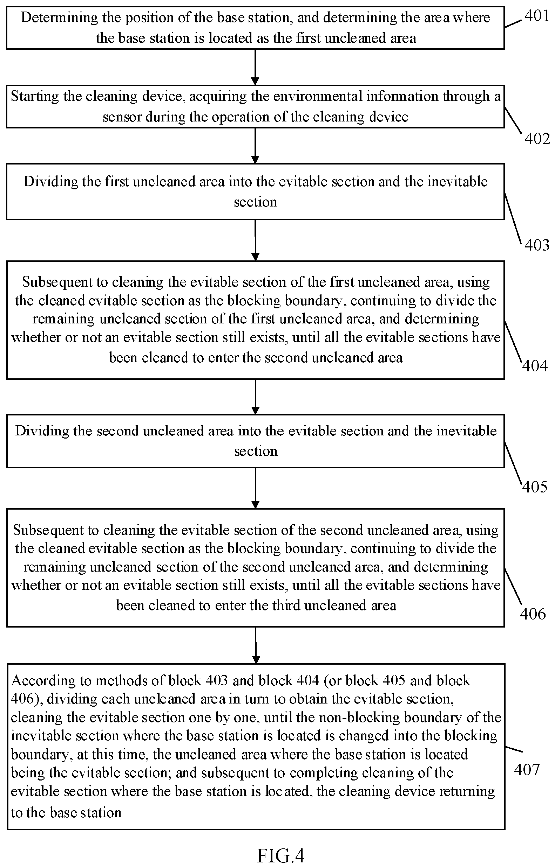

FIG. 4 is a flowchart illustrating another cleaning method according to an embodiment of the present invention. As illustrated in FIG. 4, the method can be applied to the cleaning device, such as the cleaning robot and the method comprises operations at blocks.

At block 401, the position of the base station is determined, and the area where the base station is located is determined as the first uncleaned area.

At block 402, the cleaning device is started, and the environmental information is acquired through a sensor during the operation of the cleaning device.

At block 403, the first uncleaned area is divided into the evitable section and the inevitable section.

The evitable section is an area that the cleaning device will not pass through when returning to the base station.

The inevitable section is an area that the cleaning device will pass through when returning to the base station.

The inevitable section has a common unblocked boundary with the next uncleaned section.

For example, in FIG. 5, the first uncleaned area is divided into the evitable section and the inevitable section. Section 1 can be the evitable section, and section 8 can be the inevitable section.

At block 404, after the evitable section of the first uncleaned area is cleaned, the cleaned evitable section is used as the blocking boundary. The remaining uncleaned section of the first uncleaned area is continued to be divided, and whether or not an evitable section still exists is determined, until all the evitable sections have been cleaned to enter the second uncleaned area.

For example, in FIG. 5, after section 1 is cleaned, cleaned section 1 is used as the blocking boundary. The remaining uncleaned section of the first uncleaned area is continued to be divided, and whether or not an evitable section still exists is determined. When the evitable section doesn't exist, the cleaning device enters the second uncleaned area.

At block 405, the second uncleaned area is divided into the evitable section and the inevitable section.

For example, the second uncleaned area is divided into the evitable section and the inevitable section, and section 2 may be the evitable section and the other section is the inevitable section.

At block 406, after the evitable section of the second uncleaned area is cleaned, the cleaned evitable section is used as the blocking boundary. The remaining uncleaned section of the second uncleaned area is continued to be divided, and whether or not an evitable section still exists is determined, until all the evitable sections have been cleaned to enter the third uncleaned area.

For example, in FIG. 5, after section 2 is cleaned, cleaned section 2 is used as the blocking boundary. The remaining uncleaned section of the second uncleaned area is continued to be divided, and whether or not an evitable section still exists is determined. When the evitable section doesn't exist, the cleaning device enters the third uncleaned area.

At block 407, according to methods of block 403 and block 404 (or block 405 and block 406), each uncleaned area is divided in turn to obtain the evitable section, and the evitable section is cleaned one by one, until the unblocked boundary of the inevitable section where the base station is located is changed into the blocking boundary. At this time, the uncleaned area where the base station is located is the evitable section. Subsequent to completing cleaning of the evitable section where the base station is located, the cleaning device returns to the base station.

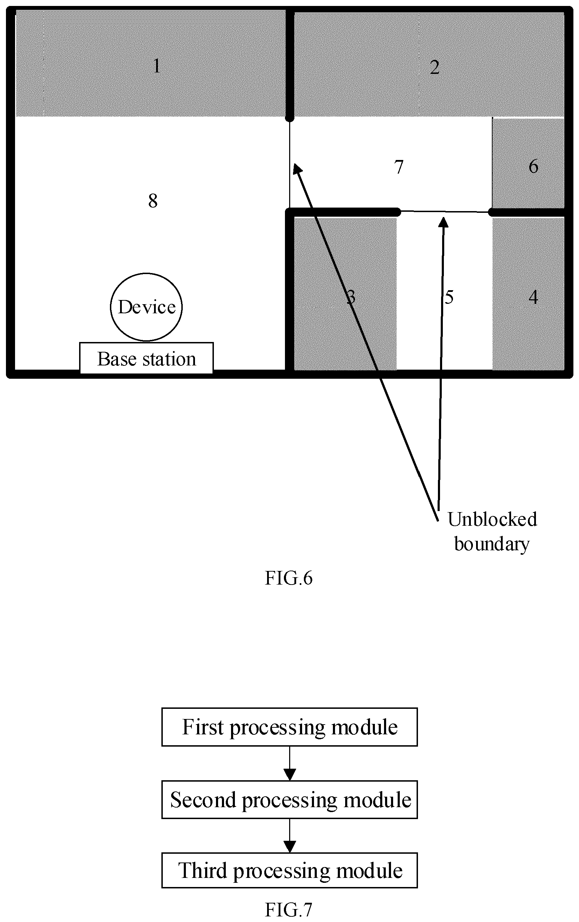

For the illustration in FIG. 5, the following sections can be obtained by division: section 1, section 2......section 8. The section numbers further represent the cleaning order position for convenience. As illustrated in FIG.6, cleaning sections with different cleaning order positions can be obtained by division.

FIG. 7 is a schematic diagram illustrating a structure of a cleaning apparatus according to an embodiment of the present invention. The cleaning apparatus is applied in the cleaning device, as illustrated in FIG. 7, and the apparatus comprises a first processing module, a second processing module, and a third processing module.

The first processing module is configured to acquire a to-be-cleaned area.

The second processing module is configured to determine a cleaning section set based on the to-be-cleaned area. The cleaning section set comprises at least one cleaning section and a cleaning order position corresponding to each of the at least one cleaning section, and the cleaning order position of each of the at least one cleaning section is related to a cleaning path of each of the at least one cleaning section.

The third processing module is configured to clean each of the at least one cleaning section in turn according to the cleaning order position corresponding to each of the at least one cleaning section.

In some embodiments, the second processing module is configured to determine the cleaning section set corresponding to the to-be-cleaned area by querying a predetermined cleaning section table.

The predetermined cleaning section table comprises at least one saved cleaning area and a cleaning section set corresponding to each of the at least one saved cleaning area.

In some embodiments, the to-be-cleaned area comprises a first uncleaned area.

The second processing module is configured to: divide the first uncleaned area into a first section and a second section; and determine the cleaning section set comprising the first section and the second section, a cleaning order position of the second section having a higher priority than a cleaning order position of the first section. The first section is an inevitable section for the cleaning device to move to any area from a base station, and the second section is an evitable section for the cleaning device to move to any area from the base station.

In some embodiments, the to-be-cleaned area at least comprises a first uncleaned area.

The second processing module is configured to divide the first uncleaned area into a third section and a fourth section. The third section is an inevitable section for the cleaning device to move from a base station to a first residual uncleaned area, and the fourth section is an evitable section for the cleaning device to move from the base station to the first residual uncleaned area. The first residual uncleaned area is an area other than the first uncleaned area in the to-be-cleaned area.

The second processing module is further configured to determine a second uncleaned area adjacent to the first uncleaned area, and divide the second uncleaned area into a fifth section and a sixth section. The fifth section is an inevitable section for the cleaning device to move from the base station to a second residual uncleaned area. The sixth section is an evitable section for the cleaning device to move from the base station to the second residual uncleaned area. The second residual uncleaned area is an area other than the first uncleaned area and the second uncleaned area in the to-be-cleaned area.

The second processing module is further configured to determine a third uncleaned area adjacent to the second uncleaned area, and divide the third uncleaned area into sections until each residual uncleaned area has been divided to obtain respective sections.

The second processing module is further configured to determine the cleaning section set based on the third section and the fourth section corresponding to the first uncleaned area, the fifth section and the sixth section corresponding to the second uncleaned area, and respective sections corresponding to each residual uncleaned area.

In some embodiments, the second processing module is configured to acquire a map of the to-be-cleaned area. The map of the to-be-cleaned area at least comprises a base station.

The second processing module is further configured to obtain at least one to-be-cleaned section by dividing to-be-cleaned area based on the map of the to-be-cleaned area.

The second processing module is further configured to determine the cleaning path from the base station to each of the at least one to-be-cleaned section.

The second processing module is further configured to determine an evitable section corresponding to each of the at least one to-be-cleaned section based on the at least one to-be-cleaned section and the cleaning path corresponding to each of the at least one to-be-cleaned section.

The second processing module is further configured to sort a cleaning order position of the at least one to-be-cleaned section based on the evitable section corresponding to each of the at least one to-be-cleaned section to obtain the cleaning section set.

In some embodiments, the third processing module is configured to record, during a cleaning process, a current cleaning section as a target cleaning section in response to determining that the cleaning device needs to return to a base station; and return to the target cleaning section after charging is completed and continue to clean according to the cleaning order position.

It should be noted that the cleaning apparatus provided in the above embodiments, when implementing the corresponding cleaning method, is only exemplified by a division of the above-described program modules. In practice, the above processing can be assigned to be completed by different program modules as needed, i.e., an internal structure of the server can be divided into different program modules to complete all or part of the above-described processing. In addition, the apparatus provided in the above embodiments belongs to a same concept as the corresponding method embodiments, and reference of the specific implementation process may be made to the method embodiments, which will not be repeated herein.

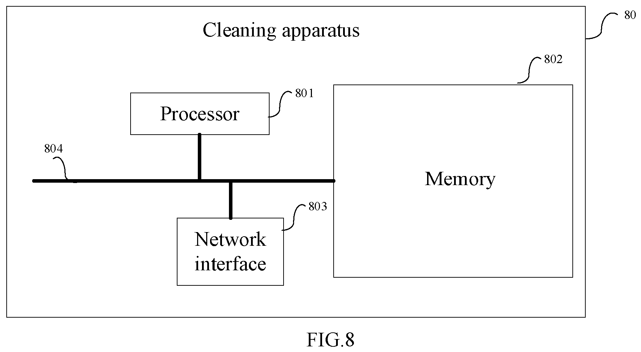

FIG. 8 is a schematic diagram illustrating a structure of another cleaning apparatus according to an embodiment of the present invention. As illustrated in FIG. 8, the apparatus 80 is applied to the server, and comprises a processor 801 and a memory 802 storing a computer program that is executable on the processor. The processor 801, when executing the computer program, is configured to perform: acquiring a to-be-cleaned area; determining a cleaning section set based on the to-be-cleaned area, The cleaning section set comprising at least one cleaning section and a cleaning order position corresponding to each of the at least one cleaning section, and the cleaning order position of each of the at least one cleaning section being related to a cleaning path of each of the at least one cleaning section; and cleaning each of the at least one cleaning section in turn according to the cleaning order position corresponding to each of the at least one cleaning section.

In an embodiment, the processor 801, when executing the computer program, is further configured to perform: determining the cleaning section set corresponding to the to-be-cleaned area by querying a predetermined cleaning section table.

The predetermined cleaning section table comprises at least one saved cleaning area and a cleaning section set corresponding to each of the at least one saved cleaning area.

In an embodiment, the processor 801, when executing the computer program, is further configured to perform: dividing the first uncleaned area into a first section and a second section, The first section being an inevitable section for the cleaning device to move to any area from a base station, and the second section being an evitable section for the cleaning device to move to any area from the base station; and determining the cleaning section set comprising the first section and the second section, a cleaning order position of the second section having a higher priority than a cleaning order position of the first section.

In an embodiment, the processor 801, when executing the computer program, is further configured to perform: dividing the first uncleaned area into a third section and a fourth section, the third section being an inevitable section for the cleaning device to move from a base station to a first residual uncleaned area, the fourth section being an evitable section for the cleaning device to move from the base station to the first residual uncleaned area, and the first residual uncleaned area being an area other than the first uncleaned area in the to-be-cleaned area;
determining a second uncleaned area adjacent to the first uncleaned area, and dividing the second uncleaned area into a fifth section and a sixth section, the fifth section being an inevitable section for the cleaning device to move from the base station to a second residual uncleaned area, the sixth section being an evitable section for the cleaning device to move from the base station to the second residual uncleaned area, and the second residual uncleaned area being an area other than the first uncleaned area and the second uncleaned area in the to-be-cleaned area;
determining a third uncleaned area adjacent to the second uncleaned area, and dividing the third uncleaned area into sections until each residual uncleaned area has been divided to obtain respective sections; and
determining the cleaning section set based on the third section and the fourth section corresponding to the first uncleaned area, the fifth section and the sixth section corresponding to the second uncleaned area, and the respective sections corresponding to each residual uncleaned area.

In an embodiment, the processor 801, when executing the computer program, is configured to perform: acquiring a map of the to-be-cleaned area, the map of the to-be-cleaned area at least comprising a base station;
obtaining at least one to-be-cleaned section by dividing the to-be-cleaned area based on the map of the to-be-cleaned area;
determining the cleaning path from the base station to each of the at least one to-be-cleaned section;
determining an evitable section corresponding to each of the at least one to-be-cleaned section based on the at least one to-be-cleaned section and the cleaning path corresponding to each of the at least one to-be-cleaned section; and
sorting a cleaning order position of the at least one to-be-cleaned section based on the evitable section corresponding to each of the at least one to-be-cleaned section to obtain the cleaning section set.

In an embodiment, the processor 801, when executing the computer program, is further configured to perform: recording, during a cleaning process, a current cleaning section as a target cleaning section in response to determining that the cleaning device needs to return to a base station; and
returning to the target cleaning section after charging is completed and continuing to clean according to the cleaning order position.

It should be noted that the cleaning apparatus and the cleaning method embodiments provided in the above embodiments belong to the same concept, and reference of the specific implementation process thereof may be made to the method embodiments, which will not be repeated herein.

In practice, the apparatus 80 may further comprise at least one network interface 803. Various components in the apparatus 80 are coupled together through a bus system 804. It will be understood that the bus system 804 realizes connection communication between the components. The bus system 804 comprises a power bus, a control bus, and a status signal bus, in addition to a data bus. However, for clarity of illustration, various buses are denoted as the bus system 804 in FIG. 8. A number of the processors 801 may be at least one. At least one network interface 803 is configured to communicate between the apparatus 80 and other devices by wired or wireless methods.

The memory 802 in an embodiment of the present invention stores various types of data to support operation of the apparatus 80.

Methods disclosed in the embodiments of the present invention may be applied in, or implemented by, the processor 801. The processor 801 may be an integrated circuit chip having signal processing capabilities. In an implementation, actions of the above method may be accomplished by an integrated logic circuit in hardware in the processor 801 or by instructions in the form of software. The above processor 801 may be a general-purpose processor, a Digital Signal Processor (DSP), or other programmable logic devices, a discrete gate or a transistor logic device, and a discrete hardware component. The method, actions, and logic block diagrams according to any of the embodiments of the present invention may be implemented or performed by the processor 801. The general-purpose processor may be a microprocessor, or the processor may be any conventional processor, etc. The actions of the method disclosed in combination with any of the embodiments of the present invention may be directly embodied as performed by a hardware decoding processor or performed by a combination of a hardware module and a software module in a decoding processor. The software module may be in the storage medium, and the storage medium is located in the memory 802. The processor 801 reads information from the memory 802 and completes the actions of the above method in combination with the hardware.

In exemplary embodiments, the apparatus 80 may be implemented by one or more Application Specific Integrated Circuits (ASICs), DSPs, Programmable Logic Devices (PLDs), Complex Programmable Logic Devices (CPLDs), Field Programmable Gate Arrays (FPGAs), general purpose processors, controllers, Microcontroller Units (MCUs), Micro Processor Units (MPUs), or other electronic elements, to perform the above methods.

According to the embodiments of the present invention, a computer readable storage medium is further provided. The computer readable storage medium has a computer program stored thereon. The computer program, when executed by a processor, performs: acquiring a to-be-cleaned area; determining a cleaning section set based on the to-be-cleaned area, the cleaning section set comprising at least one cleaning section and a cleaning order position corresponding to each of the at least one cleaning section, and the cleaning order position of each of the at least one cleaning section being related to a cleaning path of each of the at least one cleaning section; and cleaning each of the at least one cleaning section in turn according to the cleaning order position corresponding to each of the at least one cleaning section.

In an embodiment, the computer program, when executed by the processor, performs: determining the cleaning section set corresponding to the to-be-cleaned area by querying a predetermined cleaning section table.

The predetermined cleaning section table comprises at least one saved cleaning area and a cleaning section set corresponding to each of the at least one saved cleaning area.

In an embodiment, the computer program, when executed by the processor, performs: dividing the first uncleaned area into a first section and a second section, the first section being an inevitable section for the cleaning device to move to any area from a base station, and the second section being an evitable section for the cleaning device to move to any area from the base station; and determining the cleaning section set comprising the first section and the second section, a cleaning order position of the second section having a higher priority than a cleaning order position of the first section.

In an embodiment, the computer program, when executed by the processor, performs: dividing the first uncleaned area into a third section and a fourth section, the third section being an inevitable section for the cleaning device to move from a base station to a first residual uncleaned area, the fourth section being an evitable section for the cleaning device to move from the base station to the first residual uncleaned area, and the first residual uncleaned area being an area other than the first uncleaned area in the to-be-cleaned area;
determining a second uncleaned area adjacent to the first uncleaned area, and dividing the second uncleaned area into a fifth section and a sixth section, the fifth section being an inevitable section for the cleaning device to move from the base station to a second residual uncleaned area, and the sixth section being an evitable section for the cleaning device to move from the base station to the second residual uncleaned area, and the second residual uncleaned area being an area other than the first uncleaned area and the second uncleaned area in the to-be-cleaned area;
determining a third uncleaned area adjacent to the second uncleaned area, and dividing the third uncleaned area into sections until each residual uncleaned area has been divided to obtain respective sections; and
determining the cleaning section set based on the third section and the fourth section corresponding to the first uncleaned area, the fifth section and the sixth section corresponding to the second uncleaned area, and the respective sections corresponding to each residual uncleaned area.

In an embodiment, the computer program, when executed by the processor, performs: acquiring a map of the to-be-cleaned area, the map of the to-be-cleaned area at least comprising a base station;
obtaining at least one to-be-cleaned section by dividing the to-be-cleaned area based on the map of the to-be-cleaned area;
determining the cleaning path from the base station to each of the at least one to-be-cleaned section;
determining an evitable section corresponding to each of the at least one to-be-cleaned section based on the at least one to-be-cleaned section and the cleaning path corresponding to each of the at least one to-be-cleaned section; and
sorting a cleaning order position of the at least one to-be-cleaned section based on the evitable section corresponding to each of the at least one to-be-cleaned section to obtain the cleaning section set.

In an embodiment, the computer program, when executed by the processor, performs: recording, during a cleaning process, a current cleaning section as a target cleaning section in response to determining that the cleaning device needs to return to a base station; and returning to the target cleaning section after charging is completed and continuing to clean according to the cleaning order position.

In several embodiments provided by the present invention, it should be understood that the apparatus and method disclosed can be implemented in other ways. The device embodiments described above are merely exemplary. For example, the units are merely divided based on logic functions. In practical implementation, the units can be divided in other manners. For example, multiple units or components can be combined or integrated into another system, or some features can be omitted or not executed. In addition, mutual coupling or direct coupling or communication connection of individual components described or discussed can be implemented as indirect coupling or communication connection via some interfaces, devices or units, which may be electrical, mechanical or in other forms.

The units illustrated as separate components may be or not be separated physically, and components shown as units may be or not be physical units, i.e., may be located at one position, or may be distributed onto multiple network units. It is possible to select some or all of the units according to actual needs, for achieving the objective of embodiments of the present invention.

In addition, the functional units in the embodiments of the present invention may be integrated into one processing unit, or alternatively be separate units, or two or more units may be integrated into one unit. The integrated unit may be implemented in the form of hardware, or in the form of a combination of hardware and a software functional unit.

A person skilled in the art can understand that all or a part of the operations in the above embodiments can be implemented by hardware, or by relevant hardware instructed by a program. The program can be stored in a computer-readable storage medium. When the program is executed, the program performs steps comprising the above embodiments of the method. The above storage medium may be any medium capable of storing program codes, comprising a mobile storage device, a Read-Only Memory (ROM), a Random Access Memory (RAM), a magnetic disk, or an optical disc.

Alternatively, when the integrated unit is implemented in the form of the software functional unit and is sold or used as a standalone product, it can be stored in a computer-readable storage medium. Based on this understanding, all or part of the technical solutions according to the embodiments of the present invention, or the part thereof that contributes to the prior art, can be embodied in the form of a software product. The computer software product may be stored in a storage medium and contain instructions to enable a computer device, such as a personal computer, a server, or a network device, to perform all or part of the steps of the method described in each of the embodiments of the present invention. The storage medium may comprise various media capable of storing program codes, such as the mobile storage device, the ROM, the RAM, the magnetic disk, or the optical disc.

## Claims

1. A cleaning method for a cleaning device and comprising:
(S101) acquiring a to-be-cleaned area;
(S102) determining a cleaning section set based on the to-be-cleaned area, wherein the cleaning section set comprises at least a cleaning section and a cleaning order position corresponding to each of the at least one cleaning section, and the cleaning order position of each of the at least one cleaning section is related to a cleaning path of each of the at least one cleaning section; and
(S103) cleaning each of the at least one cleaning section in turn according to the cleaning order position corresponding to each of the at least one cleaning section.

2. The method according to claim 1, wherein said (S102) determining the cleaning section set based on the to-be-cleaned area comprises:
determining the cleaning section set corresponding to the to-be-cleaned area by querying a predetermined cleaning section table,
wherein the predetermined cleaning section table comprises at least a saved cleaning area and a cleaning section set corresponding to each of the at least one saved cleaning area.

3. The method according to claim 1, wherein the to-be-cleaned area comprises: a first uncleaned area; and
said (S102) determining the cleaning section set based on the to-be-cleaned area comprises:
dividing the first uncleaned area into a first section and a second section, the first section being an inevitable section for the cleaning device to move to any area from a base station, and the second section being an evitable section for the cleaning device to move to any area from the base station; and
determining the cleaning section set comprising the first section and the second section, a cleaning order position of the second section having a higher priority than a cleaning order position of the first section.

4. The method according to claim 1, wherein the to-be-cleaned area at least comprises: a first uncleaned area;
said (S102) determining the cleaning section set based on the to-be-cleaned area comprises:
dividing the first uncleaned area into a third section and a fourth section, the third section being an inevitable section for the cleaning device to move from a base station to a first residual uncleaned area, the fourth section being an evitable section for the cleaning device to move from the base station to the first residual uncleaned area, and the first residual uncleaned area being an area other than the first uncleaned area in the to-be-cleaned area;
determining a second uncleaned area adjacent to the first uncleaned area, and dividing the second uncleaned area into a fifth section and a sixth section, the fifth section being an inevitable section for the cleaning device to move from the base station to a second residual uncleaned area, the sixth section being an evitable section for the cleaning device to move from the base station to the second residual uncleaned area, and the second residual uncleaned area being an area other than the first uncleaned area and the second uncleaned area in the to-be-cleaned area;
determining a third uncleaned area adjacent to the second uncleaned area, and dividing the third uncleaned area into sections until each residual uncleaned area has been divided to obtain respective sections; and
determining the cleaning section set based on the third section and the fourth section corresponding to the first uncleaned area, the fifth section and the sixth section corresponding to the second uncleaned area, and the respective sections corresponding to each residual uncleaned area.

5. The method according to claim 1, wherein said (S102) determining the cleaning section set based on the to-be-cleaned area comprises:
acquiring a map of the to-be-cleaned area, the map of the to-be-cleaned area at least comprising a base station;
obtaining at least a to-be-cleaned section by dividing the to-be-cleaned area based on the map of the to-be-cleaned area;
determining the cleaning path from the base station to each of the at least one to-be-cleaned section;
determining an evitable section corresponding to each of the at least one to-be-cleaned section based on the at least one to-be-cleaned section and the cleaning path corresponding to each of the at least one to-be-cleaned section; and
obtaining the cleaning section set by sorting a cleaning order position of the at least one to-be-cleaned section based on the evitable section corresponding to each of the at least one to-be-cleaned section.

6. The method according to claim 1, wherein said (S103) cleaning each of the at least one cleaning section in turn according to the cleaning order position corresponding to each of the at least one cleaning section comprises:
recording, during a cleaning process, a current cleaning section as a target cleaning section in response to determining that the cleaning device needs to return to a base station; and
returning to the target cleaning section after charging is completed, and continuing to clean according to the cleaning order position.

7. A cleaning apparatus (80) for a cleaning device and comprising:
a first processing module configured to acquire a to-be-cleaned area;
a second processing module configured to determine a cleaning section set based on the to-be-cleaned area, wherein the cleaning section set comprises at least a cleaning section and a cleaning order position corresponding to each of the at least one cleaning section, and the cleaning order position of each of the at least one cleaning section is related to a cleaning path of each of the at least one cleaning section; and
a third processing module configured to clean each of the at least one cleaning section in turn based on the cleaning order position corresponding to each of the at least one cleaning section.

8. The apparatus according to claim 7, wherein the second processing module is configured to determine the cleaning section set corresponding to the to-be-cleaned area by querying a predetermined cleaning section table, and
wherein the predetermined cleaning section table comprises at least a saved cleaning area and a cleaning section set corresponding to each of the at least one saved cleaning area.

9. The apparatus according to claim 7, wherein the to-be-cleaned area comprises: a first uncleaned area; and
the second processing module is configured to:
divide the first uncleaned area into a first section and a second section, the first section being an inevitable section for the cleaning device to move to any area from a base station, and the second section being an evitable section for the cleaning device to move to any area from the base station; and
determine the cleaning section set comprising the first section and the second section, a cleaning order position of the second section having a higher priority than a cleaning order position of the first section.

10. The apparatus according to claim 7, wherein the to-be-cleaned area at least comprises: a first uncleaned area; and
the second processing module is configured to:
divide the first uncleaned area into a third section and a fourth section, the third section being an inevitable section for the cleaning device to move from a base station to a first residual uncleaned area, the fourth section being an evitable section for the cleaning device to move from the base station to the first residual uncleaned area, and the first residual uncleaned area being an area other than the first uncleaned area in the to-be-cleaned area;
determine a second uncleaned area adjacent to the first uncleaned area, divide the second uncleaned area into a fifth section and a sixth section, the fifth section being an inevitable section for the cleaning device to move from the base station to a second residual uncleaned area, the sixth section being an evitable section for the cleaning device to move from the base station to the second residual uncleaned area, and the second residual uncleaned area being an area other than the first uncleaned area and the second uncleaned area in the to-be-cleaned area;
determine a third uncleaned area adjacent to the second uncleaned area, and divide the third uncleaned area into sections until each residual uncleaned area has been divided to obtain respective sections; and
determine the cleaning section set based on the third section and the fourth section corresponding to the first uncleaned area, the fifth section and the sixth section corresponding to the second uncleaned area, and respective sections corresponding to each residual uncleaned area.

11. The apparatus according to claim 7, wherein the second processing module is configured to:
acquire a map of the to-be-cleaned area, the map of the to-be-cleaned area at least comprising a base station;
obtain at least a to-be-cleaned section by dividing the to-be-cleaned area based on the map of the to-be-cleaned area;
determine the cleaning path from the base station to each of the at least one to-be-cleaned section;
determine an evitable section corresponding to each of the at least one to-be-cleaned section based on the at least one to-be-cleaned section and the cleaning path corresponding to each of the at least one to-be-cleaned section; and
sort a cleaning order position of the at least one to-be-cleaned section based on the evitable section corresponding to each of the at least one to-be-cleaned section to obtain the cleaning section set.

12. The apparatus according to claim 7, wherein the third processing module is configured to: record, during a cleaning process, a current cleaning section as a target cleaning section in response to determining that the cleaning device needs to return to a base station; and
return to the target cleaning section after charging is completed, and continue to clean based on the cleaning order position.

13. A cleaning apparatus (80), comprising:
a processor (801); and
a memory (802) storing a computer program that is executable on the processor (801),
wherein the processor (801) is configured to, when executing the computer program, implement a step of a method according to any one of claims 1 to 6.

14. A computer readable storage medium, having a computer program stored thereon,
wherein the computer program, when executed by a processor (801), implements a step of a method according to any one of claims 1 to 6.

## Patentansprüche

1. Reinigungsverfahren für eine Reinigungsvorrichtung, umfassend:
(S101) Erfassen eines zu reinigenden Bereichs;
(S102) Bestimmen eines Reinigungsabschnittssatzes basierend auf dem zu reinigenden Bereich, wobei der Reinigungsabschnittssatz mindestens einen Reinigungsabschnitt und eine Reinigungsreihenfolgeposition umfasst, die jedem des mindestens einen Reinigungsabschnitts entspricht, und die Reinigungsreihenfolgeposition jedes des mindestens einen Reinigungsabschnitts mit einem Reinigungspfad jedes des mindestens einen Reinigungsabschnitts in Beziehung steht; und
(S103) Reinigen jedes des mindestens einen Reinigungsabschnitts der Reihe nach gemäß der Reinigungsreihenfolgeposition, die jedem des mindestens einen Reinigungsabschnitts entspricht.

2. Verfahren nach Anspruch 1, wobei das Bestimmen (S102) des Reinigungsabschnittssatzes basierend auf dem zu reinigenden Bereich umfasst:
Bestimmen des Reinigungsabschnittssatzes, der dem zu reinigenden Bereich entspricht, durch Abfragen einer vorbestimmten Reinigungsabschnittstabelle,
wobei die vorbestimmte Reinigungsabschnittstabelle mindestens einen gespeicherten Reinigungsbereich und einen Reinigungsabschnittssatz umfasst, der jedem des mindestens einen gespeicherten Reinigungsbereichs entspricht.

3. Verfahren nach Anspruch 1, wobei der zu reinigende Bereich umfasst: einen ersten ungereinigten Bereich; und
wobei das Bestimmen (S102) des Reinigungsabschnittssatzes basierend auf dem zu reinigenden Bereich umfasst:
Unterteilen des ersten ungereinigten Bereichs in einen ersten Abschnitt und einen zweiten Abschnitt, wobei der erste Abschnitt ein unvermeidbarer Abschnitt für die Reinigungsvorrichtung ist, um sich von einer Basisstation zu einem beliebigen Bereich zu bewegen, und der zweite Abschnitt ein vermeidbarer Abschnitt für die Reinigungsvorrichtung ist, um sich von der Basisstation zu einem beliebigen Bereich zu bewegen; und
Bestimmen des Reinigungsabschnittssatzes, der den ersten Abschnitt und den zweiten Abschnitt umfasst, wobei eine Reinigungsreihenfolgeposition des zweiten Abschnitts eine höhere Priorität aufweist als eine Reinigungsreihenfolgeposition des ersten Abschnitts.

4. Verfahren nach Anspruch 1, wobei der zu reinigende Bereich mindestens umfasst: einen ersten ungereinigten Bereich;
wobei das Bestimmen (S102) des Reinigungsabschnittssatzes basierend auf dem zu reinigenden Bereich umfasst:
Unterteilen des ersten ungereinigten Bereichs in einen dritten Abschnitt und einen vierten Abschnitt, wobei der dritte Abschnitt ein unvermeidbarer Abschnitt für die Reinigungsvorrichtung ist, um sich von einer Basisstation zu einem ersten verbleibenden ungereinigten Bereich zu bewegen, der vierte Abschnitt ein vermeidbarer Abschnitt für die Reinigungsvorrichtung ist, um sich von der Basisstation zu dem ersten verbleibenden ungereinigten Bereich zu bewegen, und der erste verbleibende ungereinigte Bereich ein anderer Bereich als der erste ungereinigte Bereich in dem zu reinigenden Bereich ist;
Bestimmen eines zweiten ungereinigten Bereichs, der an den ersten ungereinigten Bereich angrenzt, und Unterteilen des zweiten ungereinigten Bereichs in einen fünften Abschnitt und einen sechsten Abschnitt, wobei der fünfte Abschnitt ein unvermeidbarer Abschnitt für die Reinigungsvorrichtung ist, um sich von der Basisstation zu einem zweiten verbleibenden ungereinigten Bereich zu bewegen, der sechste Abschnitt ein vermeidbarer Abschnitt für die Reinigungsvorrichtung ist, um sich von der Basisstation zu dem zweiten verbleibenden ungereinigten Bereich zu bewegen, und der zweite verbleibende ungereinigte Bereich ein anderer Bereich als der erste ungereinigte Bereich und der zweite ungereinigte Bereich in dem zu reinigenden Bereich ist;
Bestimmen eines dritten ungereinigten Bereichs, der an den zweiten ungereinigten Bereich angrenzt, und Unterteilen des dritten ungereinigten Bereichs in Abschnitte, bis jeder verbleibende ungereinigte Bereich unterteilt worden ist, um jeweilige Abschnitte zu erhalten; und
Bestimmen des Reinigungsabschnittssatzes basierend auf dem dritten Abschnitt und dem vierten Abschnitt, die dem ersten ungereinigten Bereich entsprechen, dem fünften Abschnitt und dem sechsten Abschnitt, die dem zweiten ungereinigten Bereich entsprechen, und den jeweiligen Abschnitten, die jedem verbleibenden ungereinigten Bereich entsprechen.

5. Verfahren nach Anspruch 1, wobei das Bestimmen (S102) des Reinigungsabschnittssatzes basierend auf dem zu reinigenden Bereich umfasst:
Erfassen einer Karte des zu reinigenden Bereichs, wobei die Karte des zu reinigenden Bereichs mindestens eine Basisstation umfasst;
Erhalten mindestens eines zu reinigenden Abschnitts durch Unterteilen des zu reinigenden Bereichs basierend auf der Karte des zu reinigenden Bereichs;
Bestimmen des Reinigungspfads von der Basisstation zu jedem des mindestens einen zu reinigenden Abschnitts;
Bestimmen eines vermeidbaren Abschnitts, der jedem des mindestens einen zu reinigenden Abschnitts entspricht, basierend auf dem mindestens einen zu reinigenden Abschnitt und dem Reinigungspfad, der jedem des mindestens einen zu reinigenden Abschnitts entspricht; und
Erhalten des Reinigungsabschnittssatzes durch Sortieren einer Reinigungsreihenfolgeposition des mindestens einen zu reinigenden Abschnitts basierend auf dem vermeidbaren Abschnitt, der jedem des mindestens einen zu reinigenden Abschnitts entspricht.

6. Verfahren nach Anspruch 1, wobei das Reinigen (S103) jedes des mindestens einen Reinigungsabschnitts der Reihe nach gemäß der Reinigungsreihenfolgeposition, die jedem des mindestens einen Reinigungsabschnitts entspricht, umfasst:
Aufzeichnen, während eines Reinigungsprozesses, eines aktuellen Reinigungsabschnitts als Zielreinigungsabschnitt als Reaktion auf das Bestimmen, dass die Reinigungsvorrichtung zu einer Basisstation zurückkehren muss; und
Zurückkehren zu dem Zielreinigungsabschnitt, nachdem das Laden abgeschlossen ist, und Fortsetzen des Reinigens gemäß der Reinigungsreihenfolgeposition.

7. Reinigungseinrichtung (80) für eine Reinigungsvorrichtung, umfassend:
ein erstes Verarbeitungsmodul, das dazu konfiguriert ist, einen zu reinigenden Bereich zu erfassen;
ein zweites Verarbeitungsmodul, das dazu konfiguriert ist, einen Reinigungsabschnittssatz basierend auf dem zu reinigenden Bereich zu bestimmen, wobei der Reinigungsabschnittssatz mindestens einen Reinigungsabschnitt und eine Reinigungsreihenfolgeposition umfasst, die jedem des mindestens einen Reinigungsabschnitts entspricht, und die Reinigungsreihenfolgeposition jedes des mindestens einen Reinigungsabschnitts mit einem Reinigungspfad jedes des mindestens einen Reinigungsabschnitts in Beziehung steht; und
ein drittes Verarbeitungsmodul, das dazu konfiguriert ist, jeden des mindestens einen Reinigungsabschnitts der Reihe nach basierend auf der Reinigungsreihenfolgeposition zu reinigen, die jedem des mindestens einen Reinigungsabschnitts entspricht.

8. Einrichtung nach Anspruch 7, wobei das zweite Verarbeitungsmodul dazu konfiguriert ist, den Reinigungsabschnittssatz, der dem zu reinigenden Bereich entspricht, durch Abfragen einer vorbestimmten Reinigungsabschnittstabelle zu bestimmen, und
wobei die vorbestimmte Reinigungsabschnittstabelle mindestens einen gespeicherten Reinigungsbereich und einen Reinigungsabschnittssatz umfasst, der jedem des mindestens einen gespeicherten Reinigungsbereichs entspricht.

9. Einrichtung nach Anspruch 7, wobei der zu reinigende Bereich umfasst: einen ersten ungereinigten Bereich; und
wobei das zweite Verarbeitungsmodul dazu konfiguriert ist:
den ersten ungereinigten Bereich in einen ersten Abschnitt und einen zweiten Abschnitt zu unterteilen, wobei der erste Abschnitt ein unvermeidbarer Abschnitt für die Reinigungsvorrichtung ist, um sich von einer Basisstation zu einem beliebigen Bereich zu bewegen, und der zweite Abschnitt ein vermeidbarer Abschnitt für die Reinigungsvorrichtung ist, um sich von der Basisstation zu einem beliebigen Bereich zu bewegen; und
den Reinigungsabschnittssatz zu bestimmen, der den ersten Abschnitt und den zweiten Abschnitt umfasst, wobei eine Reinigungsreihenfolgeposition des zweiten Abschnitts eine höhere Priorität aufweist als eine Reinigungsreihenfolgeposition des ersten Abschnitts.

10. Einrichtung nach Anspruch 7, wobei der zu reinigende Bereich mindestens umfasst: einen ersten ungereinigten Bereich; und
wobei das zweite Verarbeitungsmodul dazu konfiguriert ist:
den ersten ungereinigten Bereich in einen dritten Abschnitt und einen vierten Abschnitt zu unterteilen, wobei der dritte Abschnitt ein unvermeidbarer Abschnitt für die Reinigungsvorrichtung ist, um sich von einer Basisstation zu einem ersten verbleibenden ungereinigten Bereich zu bewegen, der vierte Abschnitt ein vermeidbarer Abschnitt für die Reinigungsvorrichtung ist, um sich von der Basisstation zu dem ersten verbleibenden ungereinigten Bereich zu bewegen, und der erste verbleibende ungereinigte Bereich ein anderer Bereich als der erste ungereinigte Bereich in dem zu reinigenden Bereich ist;
einen zweiten ungereinigten Bereich zu bestimmen, der an den ersten ungereinigten Bereich angrenzt, den zweiten ungereinigten Bereich in einen fünften Abschnitt und einen sechsten Abschnitt zu unterteilen, wobei der fünfte Abschnitt ein unvermeidbarer Abschnitt für die Reinigungsvorrichtung ist, um sich von der Basisstation zu einem zweiten verbleibenden ungereinigten Bereich zu bewegen, der sechste Abschnitt ein vermeidbarer Abschnitt für die Reinigungsvorrichtung ist, um sich von der Basisstation zu dem zweiten verbleibenden ungereinigten Bereich zu bewegen, und der zweite verbleibende ungereinigte Bereich ein anderer Bereich als der erste ungereinigte Bereich und der zweite ungereinigte Bereich in dem zu reinigenden Bereich ist;
einen dritten ungereinigten Bereich zu bestimmen, der an den zweiten ungereinigten Bereich angrenzt, und den dritten ungereinigten Bereich in Abschnitte zu unterteilen, bis jeder verbleibende ungereinigte Bereich unterteilt worden ist, um jeweilige Abschnitte zu erhalten; und
den Reinigungsabschnittssatz basierend auf dem dritten Abschnitt und dem vierten Abschnitt, die dem ersten ungereinigten Bereich entsprechen, dem fünften Abschnitt und dem sechsten Abschnitt, die dem zweiten ungereinigten Bereich entsprechen, und jeweiligen Abschnitten, die jedem verbleibenden ungereinigten Bereich entsprechen, zu bestimmen.

11. Einrichtung nach Anspruch 7, wobei das zweite Verarbeitungsmodul dazu konfiguriert ist:
eine Karte des zu reinigenden Bereichs zu erfassen, wobei die Karte des zu reinigenden Bereichs mindestens eine Basisstation umfasst;
mindestens einen zu reinigenden Abschnitt durch Unterteilen des zu reinigenden Bereichs basierend auf der Karte des zu reinigenden Bereichs zu erhalten;
den Reinigungspfad von der Basisstation zu jedem des mindestens einen zu reinigenden Abschnitts zu bestimmen;
einen vermeidbaren Abschnitt, der jedem des mindestens einen zu reinigenden Abschnitts entspricht, basierend auf dem mindestens einen zu reinigenden Abschnitt und dem Reinigungspfad, der jedem des mindestens einen zu reinigenden Abschnitts entspricht, zu bestimmen; und
eine Reinigungsreihenfolgeposition des mindestens einen zu reinigenden Abschnitts basierend auf dem vermeidbaren Abschnitt, der jedem des mindestens einen zu reinigenden Abschnitts entspricht, zu sortieren, um den Reinigungsabschnittssatz zu erhalten.

12. Einrichtung nach Anspruch 7, wobei das dritte Verarbeitungsmodul dazu konfiguriert ist: während eines Reinigungsprozesses einen aktuellen Reinigungsabschnitt als Zielreinigungsabschnitt als Reaktion auf das Bestimmen aufzuzeichnen, dass die Reinigungsvorrichtung zu einer Basisstation zurückkehren muss; und
zu dem Zielreinigungsabschnitt zurückzukehren, nachdem das Laden abgeschlossen ist, und das Reinigen basierend auf der Reinigungsreihenfolgeposition fortzusetzen.

13. Reinigungseinrichtung (80), umfassend:
einen Prozessor (801); und
einen Speicher (802), der ein Computerprogramm speichert, das auf dem Prozessor (801) ausführbar ist, wobei der Prozessor (801) dazu konfiguriert ist, beim Ausführen des Computerprogramms einen Schritt eines Verfahrens nach einem der Ansprüche 1 bis 6 zu implementieren.

14. Computerlesbares Speichermedium, auf dem ein Computerprogramm gespeichert ist,
wobei das Computerprogramm, wenn es durch einen Prozessor (801) ausgeführt wird, einen Schritt eines Verfahrens nach einem der Ansprüche 1 bis 6 durchführt.

## Revendications

1. Procédé de nettoyage pour un dispositif de nettoyage et comprenant :
(S101) l'acquisition d'une zone à nettoyer ;
(S102) la détermination d'un ensemble de sections de nettoyage sur la base de la zone à nettoyer, dans lequel l'ensemble de sections de nettoyage comprend au moins une section de nettoyage et une position d'ordre de nettoyage correspondant à chacune de ladite au moins une section de nettoyage, et la position d'ordre de nettoyage de chacune de ladite au moins une section de nettoyage est liée à un trajet de nettoyage de chacune de ladite au moins une section de nettoyage ; et
(S103) le nettoyage de chacune de ladite au moins une section de nettoyage à tour de rôle selon la position d'ordre de nettoyage correspondant à chacune de ladite au moins une section de nettoyage.

2. Procédé selon la revendication 1, dans lequel ladite détermination (S102) de l'ensemble de sections de nettoyage sur la base de la zone à nettoyer comprend :
la détermination de l'ensemble de sections de nettoyage correspondant à la zone à nettoyer par interrogation d'une table de sections de nettoyage prédéterminée,
dans lequel la table de sections de nettoyage prédéterminée comprend au moins une zone de nettoyage sauvegardée et un ensemble de sections de nettoyage correspondant à chacune de ladite au moins une zone de nettoyage sauvegardée.

3. Procédé selon la revendication 1, dans lequel la zone à nettoyer comprend : une première zone non nettoyée ; et
ladite détermination (S102) de l'ensemble de sections de nettoyage sur la base de la zone à nettoyer comprend :
la division de la première zone non nettoyée en une première section et une deuxième section, la première section étant une section inévitable pour que le dispositif de nettoyage se déplace vers une quelconque zone depuis une station de base, et la deuxième section étant une section évitable pour que le dispositif de nettoyage se déplace vers une quelconque zone depuis la station de base ; et
la détermination de l'ensemble de sections de nettoyage comprenant la première section et la deuxième section, une position d'ordre de nettoyage de la deuxième section ayant une priorité plus élevée qu'une position d'ordre de nettoyage de la première section.

4. Procédé selon la revendication 1, dans lequel la zone à nettoyer comprend au moins : une première zone non nettoyée ;
ladite détermination (S102) de l'ensemble de sections de nettoyage sur la base de la zone à nettoyer comprend :
la division de la première zone non nettoyée en une troisième section et une quatrième section, la troisième section étant une section inévitable pour que le dispositif de nettoyage se déplace d'une station de base vers une première zone non nettoyée résiduelle, la quatrième section étant une section évitable pour que le dispositif de nettoyage se déplace de la station de base vers la première zone non nettoyée résiduelle, et la première zone non nettoyée résiduelle étant une zone autre que la première zone non nettoyée dans la zone à nettoyer ;
la détermination d'une deuxième zone non nettoyée adjacente à la première zone non nettoyée, et la division de la deuxième zone non nettoyée en une cinquième section et une sixième section, la cinquième section étant une section inévitable pour que le dispositif de nettoyage se déplace de la station de base vers une deuxième zone non nettoyée résiduelle, la sixième section étant une section évitable pour que le dispositif de nettoyage se déplace de la station de base vers la deuxième zone non nettoyée résiduelle, et la deuxième zone non nettoyée résiduelle étant une zone autre que la première zone non nettoyée et la deuxième zone non nettoyée dans la zone à nettoyer ;
la détermination d'une troisième zone non nettoyée adjacente à la deuxième zone non nettoyée, et la division de la troisième zone non nettoyée en sections jusqu'à ce que chaque zone non nettoyée résiduelle ait été divisée afin d'obtenir des sections respectives ; et
la détermination de l'ensemble de sections de nettoyage sur la base de la troisième section et de la quatrième section correspondant à la première zone non nettoyée, de la cinquième section et de la sixième section correspondant à la deuxième zone non nettoyée, et des sections respectives correspondant à chaque zone non nettoyée résiduelle.

5. Procédé selon la revendication 1, dans lequel ladite détermination (S102) de l'ensemble de sections de nettoyage sur la base de la zone à nettoyer comprend :
l'acquisition d'une carte de la zone à nettoyer, la carte de la zone à nettoyer comprenant au moins une station de base ;
l'obtention d'au moins une section à nettoyer par division de la zone à nettoyer sur la base de la carte de la zone à nettoyer ;
la détermination du trajet de nettoyage depuis la station de base vers chacune de ladite au moins une section à nettoyer ;
la détermination d'une section évitable correspondant à chacune de ladite au moins une section à nettoyer sur la base de ladite au moins une section à nettoyer et du trajet de nettoyage correspondant à chacune de ladite au moins une section à nettoyer ; et
l'obtention de l'ensemble de sections de nettoyage par tri d'une position d'ordre de nettoyage de ladite au moins une section à nettoyer sur la base de la section évitable correspondant à chacune de ladite au moins une section à nettoyer.

6. Procédé selon la revendication 1, dans lequel ledit nettoyage (S103) de chacune de ladite au moins une section de nettoyage à tour de rôle selon la position d'ordre de nettoyage correspondant à chacune de ladite au moins une section de nettoyage comprend :
l'enregistrement, pendant un processus de nettoyage, d'une section de nettoyage actuelle en tant que section de nettoyage cible en réponse à la détermination que le dispositif de nettoyage doit retourner à une station de base ; et
le retour à la section de nettoyage cible après que la charge est terminée, et la poursuite du nettoyage selon la position d'ordre de nettoyage.

7. Appareil de nettoyage (80) pour un dispositif de nettoyage et comprenant :
un premier module de traitement configuré pour acquérir une zone à nettoyer ;
un deuxième module de traitement configuré pour déterminer un ensemble de sections de nettoyage sur la base de la zone à nettoyer, dans lequel l'ensemble de sections de nettoyage comprend au moins une section de nettoyage et une position d'ordre de nettoyage correspondant à chacune de ladite au moins une section de nettoyage, et la position d'ordre de nettoyage de chacune de ladite au moins une section de nettoyage est liée à un trajet de nettoyage de chacune de ladite au moins une section de nettoyage ; et
un troisième module de traitement configuré pour nettoyer chacune de ladite au moins une section de nettoyage à tour de rôle sur la base de la position d'ordre de nettoyage correspondant à chacune de ladite au moins une section de nettoyage.

8. Appareil selon la revendication 7, dans lequel le deuxième module de traitement est configuré pour déterminer l'ensemble de sections de nettoyage correspondant à la zone à nettoyer par interrogation d'une table de sections de nettoyage prédéterminée, et
dans lequel la table de sections de nettoyage prédéterminée comprend au moins une zone de nettoyage sauvegardée et un ensemble de sections de nettoyage correspondant à chacune de ladite au moins une zone de nettoyage sauvegardée.

9. Appareil selon la revendication 7, dans lequel la zone à nettoyer comprend : une première zone non nettoyée ; et
le deuxième module de traitement est configuré pour :
diviser la première zone non nettoyée en une première section et une deuxième section, la première section étant une section inévitable pour que le dispositif de nettoyage se déplace vers une quelconque zone depuis une station de base, et la deuxième section étant une section évitable pour que le dispositif de nettoyage se déplace vers une quelconque zone depuis la station de base ; et
déterminer l'ensemble de sections de nettoyage comprenant la première section et la deuxième section, une position d'ordre de nettoyage de la deuxième section ayant une priorité plus élevée qu'une position d'ordre de nettoyage de la première section.

10. Appareil selon la revendication 7, dans lequel la zone à nettoyer comprend au moins : une première zone non nettoyée ; et
le deuxième module de traitement est configuré pour :
diviser la première zone non nettoyée en une troisième section et une quatrième section, la troisième section étant une section inévitable pour que le dispositif de nettoyage se déplace d'une station de base vers une première zone non nettoyée résiduelle, la quatrième section étant une section évitable pour que le dispositif de nettoyage se déplace de la station de base vers la première zone non nettoyée résiduelle, et la première zone non nettoyée résiduelle étant une zone autre que la première zone non nettoyée dans la zone à nettoyer ;
déterminer une deuxième zone non nettoyée adjacente à la première zone non nettoyée, diviser la deuxième zone non nettoyée en une cinquième section et une sixième section, la cinquième section étant une section inévitable pour que le dispositif de nettoyage se déplace de la station de base vers une deuxième zone non nettoyée résiduelle, la sixième section étant une section évitable pour que le dispositif de nettoyage se déplace de la station de base vers la deuxième zone non nettoyée résiduelle, et la deuxième zone non nettoyée résiduelle étant une zone autre que la première zone non nettoyée et la deuxième zone non nettoyée dans la zone à nettoyer ;
déterminer une troisième zone non nettoyée adjacente à la deuxième zone non nettoyée, et diviser la troisième zone non nettoyée en sections jusqu'à ce que chaque zone non nettoyée résiduelle ait été divisée afin d'obtenir des sections respectives ; et
déterminer l'ensemble de sections de nettoyage sur la base de la troisième section et de la quatrième section correspondant à la première zone non nettoyée, de la cinquième section et de la sixième section correspondant à la deuxième zone non nettoyée, et de sections respectives correspondant à chaque zone non nettoyée résiduelle.

11. Appareil selon la revendication 7, dans lequel le deuxième module de traitement est configuré pour :
acquérir une carte de la zone à nettoyer, la carte de la zone à nettoyer comprenant au moins une station de base ;
obtenir au moins une section à nettoyer par division de la zone à nettoyer sur la base de la carte de la zone à nettoyer ;
déterminer le trajet de nettoyage depuis la station de base vers chacune de ladite au moins une section à nettoyer ;
déterminer une section évitable correspondant à chacune de ladite au moins une section à nettoyer sur la base de ladite au moins une section à nettoyer et du trajet de nettoyage correspondant à chacune de ladite au moins une section à nettoyer ; et
trier une position d'ordre de nettoyage de ladite au moins une section à nettoyer sur la base de la section évitable correspondant à chacune de ladite au moins une section à nettoyer afin d'obtenir l'ensemble de sections de nettoyage.

12. Appareil selon la revendication 7, dans lequel le troisième module de traitement est configuré pour : enregistrer, pendant un processus de nettoyage, une section de nettoyage actuelle en tant que section de nettoyage cible en réponse à la détermination que le dispositif de nettoyage doit retourner à une station de base ; et
retourner à la section de nettoyage cible après que la charge est terminée, et continuer à nettoyer sur la base de la position d'ordre de nettoyage.

13. Appareil de nettoyage (80), comprenant :
un processeur (801) ; et
une mémoire (802) stockant un programme informatique qui est exécutable sur le processeur (801), dans lequel le processeur (801) est configuré pour, lors de l'exécution du programme informatique, mettre en œuvre une étape d'un procédé selon l'une quelconque des revendications 1 à 6.

14. Support de stockage lisible par ordinateur, ayant un programme informatique stocké sur celui-ci,
dans lequel le programme informatique, lorsqu'il est exécuté par un processeur (801), met en œuvre une étape d'un procédé selon l'une quelconque des revendications 1 à 6.
